# EUROPÄISCHE PATENTSCHRIFT

(11) **EP 2 860 338 B1**
(45) Veröffentlichungstag und Bekanntmachung des Hinweises auf die Patenterteilung: **14.10.2020**
(21) Anmeldenummer: 13192723.8
(22) Anmeldetag: 13.11.2013
(51) Int. Cl.: E05F 15/611, E05F 15/614, F16H 57/00, F16H 1/28, F16H 1/46

(54) **ANGETRIEBENE KLAPPENANORDNUNG FÜR EIN KRAFTFAHRZEUG**
POWERED PANEL ASSEMBLY FOR A MOTOR VEHICLE
HAYON MOTORISÉ POUR UN VÉHICULE AUTOMOBILE

(30) Priorität: 14.10.2013 EP 13188489
(43) Veröffentlichungstag der Anmeldung: 15.04.2015
(73) Patentinhaber: IMS Gear SE & Co. KGaA, 78166 Donaueschingen (DE)
(72) Erfinder: Hagedorn, Heinz Gert, 78628 Rottweil (DE); Kieninger, Matthias, 78050 Villingen-Schwenningen (DE)
(74) Vertreter: Westphal, Mussgnug & Partner Patentanwälte mbB

(56) Entgegenhaltungen:
- DE-A1-102011 078 518
- DE-A1-102011 082 540
- DE-A1-102011 102 731
- DE-U1-202011 106 149

## Beschreibung

Die Erfindung betrifft eine angetriebene Klappenanordnung für ein Kraftfahrzeug, insbesondere für eine Heckklappe eines Kraftfahrzeugs, mit den Merkmalen des Oberbegriffs des Anspruchs 1.

Die Anforderungen des Marktes im Hinblick auf eine komfortable Nutzung eines Kraftfahrzeugs steigen immer weiter. Dies drückt sich insbesondere darin aus, dass für eine Vielzahl von Bewegungen von Bauteilen des Kraftfahrzeugs die Positionsverstellung von Hand komplett durch eine -insbesondere elektrischangetriebene Bewegung ersetzt oder zumindest teilweise durch motorische Unterstützung ersetzt wird oder dass eine solche Ersetzung zumindest optional ist. Einige Beispiele, für die dieser Prozess bereits weit fortgeschritten ist, sind die Verstellung der Fenster, der Sitze, oder auch der Außenspiegel eines Kraftfahrzeugs.

In jüngerer Zeit gibt es verstärkt auch Bestrebungen, eine Möglichkeit zur angetriebenen Bewegung von klappbar am Fahrzeug angeordneten Bauteilen, insbesondere der Heckklappe eines Fahrzeugs zu schaffen. Solche angetriebenen Klappenanordnungen sind beispielsweise aus der DE 40 07 162 A1, der WO 00/36259 A1, der DE 40 41 480 A1, der DE 10 2011 082 540 A1, der DE 10 2011 078 518 A1, der DE 10 2011 102 731 A1 und der DE 20 2011 106 149 U1 bekannt.

Motoren und Getriebe, die im Zusammenhang mit angetriebenen Klappenanordnungen Verwendung finden, sind einer Reihe von Beschränkungen, insbesondere im Hinblick auf den verfügbaren Bauraum, unterworfen, die insbesondere dazu führen, dass einerseits relativ aufwändige und dadurch teure Antriebslösung gewählt werden müssen und andererseits ein erhöhtes Risiko dafür entstehen kann, dass das Getriebe sich infolge der wirkenden Kräfte, die zudem noch je nach Klappenposition variieren können, weil oft die Lage des Klappenantriebs relativ zum Erdboden je nach aktueller Position der Klappe variiert, verklemmt.

Die Aufgabe der Erfindung besteht darin, eine angetriebene Klappenanordnung mit einem Klappenantrieb bereitzustellen, der kostengünstig herzustellen ist und darüber hinaus weniger leicht verklemmt als bisherige Klappenantriebe. Dabei setzt die Erfindung konkret an der Ausgestaltung einer aus Elektromotor und Untersetzungsgetriebe bestehenden Baugruppe an, die universell als Antriebsbaugruppe für die verschiedenen aus dem Stand der Technik bekannten Mechaniken zur Durchführung der Klappbewegung ist, insbesondere aber für die Verwendung im Zusammenhang mit Spindelantrieben, wie sie z.B. aus der DE 20 2011 106 149 U1 bekannt sind besonders gut geeignet sind. Weil es für das Erzielen der erfindungsgemäßen Vorteile nicht auf die konkrete Ausgestaltung der jeweils angetriebenen Mechanik, mit der die Antriebsbewegung auf die Heckklappe übertragen wird ankommt, wird für deren konkreten Aufbau auf den bekannten Stand der Technik verwiesen.

Die erfindungsgemäße angetriebene Klappenanordnung für ein Kraftfahrzeug ist insbesondere für die Bereitstellung einer angetriebenen Heckklappe geeignet. Sie umfasst eine Klappe und einen Klappenantrieb zum Öffnen und/oder Schließen der Klappe, wobei der Klappenantrieb einen Motor mit einer Motorwelle und einem Motorritzel und mindestens ein Planetengetriebe mit Sonnenrad, Planetenträger mit auf Lagerbolzen angeordneten Planetenwälzkörpern und Hohlrad aufweist. Dabei wird das Sonnenrad des mindestens einen Planetengetriebes durch das Motorritzel gebildet und über das mindestens eine Planetengetriebe eine Abtriebswelle angetrieben.

Die Abtriebswelle kann Bestandteil des mindestens einen Planetengetriebes sein, sie kann aber auch unter Zwischenschaltung eines weiteren Getriebes, das insbesondere ebenfalls als Planetengetriebe ausgestaltet sein kann, angetrieben werden.

Erfindungswesentlich ist dabei, dass das Motorritzel lediglich auf die Motorwelle aufgesteckt ist, während es nach dem bisherigen Stand der Technik an der Motorwelle befestigt war. Dadurch wird einerseits das Befestigen des Motorritzels als Produktionsschritt überflüssig, was Kosten spart, andererseits fallen durch die Art und Weise der Befestigung in den Raum gestellte Beschränkungen hinsichtlich der Auswahl des Materials des Motorritzels fort und schließlich wird auch sicher vermieden, dass durch Schwankungen der Position, an der das Motorritzel angeordnet ist, das Betriebsverhalten des Klappenantriebs beeinträchtigt wird.

Der guten Ordnung halber sei noch angemerkt, dass die Klappenanordnung darüber hinaus in der Regel auch noch eine zwischen Klappenantrieb und Klappe angeordnete Antriebsmechanik aufweisen wird, mit der die durch den Klappenantrieb bereitgestellte Kraft bzw. Bewegung in die Klappbewegung der Klappe überführt wird. Wie weiter oben bereits erwähnt wurde, sind derartige Antriebsmechaniken für eine Klappenanordnung aus dem Stand der Technik in verschiedenen Ausführungsformen bekannt, und es kommt für die technische Umsetzung der Erfindung, die eine Verbesserung des Klappenantriebs erzielt, nicht auf die konkrete Ausgestaltung der Antriebsmechanik an, sondern die Erfindung ist in Verbindung mit allen bekannten Antriebsmechaniken verwendbar.

Erfindungsgemäß ist das Motorritzel in axialer Richtung der Motorwelle verschiebbar angeordnet, so dass sich das Motorritzel beim Betrieb des Klappenantriebs in axialer Richtung relativ zur Motorwelle verschieben kann, was, wie die Erfinder festgestellt haben, überraschenderweise zu einem gegenüber dem bisherigen Stand der Technik, deutlich reduzierten Verklemmrisiko führt.

Diese Ausführungsform der Erfindung kann dadurch weitergebildet werden, dass die Verschiebbarkeit des Motorritzels in axialer Richtung der Motorwelle in Richtung auf ein Gehäuse des Motors hin und/oder in Richtung auf den Planetenträger des Planetengetriebes hin durch einen Anschlag begrenzt wird. Dadurch kann ein Arbeitsbereich definiert werden, in dem sichergestellt ist, dass das als Sonnenrad des mindestens einen Planetengetriebes verwendete Motorritzel in gewünschter Weise mit den Planetenwälzkörpern kämmt.

Besonders vorteilhaft ist es dabei, den Anschlag, der die Verschiebbarkeit des Motorritzels in Richtung auf das Gehäuse des Motors hin begrenzt, am Motor, beispielsweise als am Motorgehäuse oder an der Motorwelle ausgebildete Struktur, zu realisieren und/oder den Anschlag, der die Verschiebbarkeit des Motorritzels in Richtung auf den Planetenträger des Planetengetriebes hin begrenzt, als eine am Planetenträger vorgesehene Struktur zu realisieren.

Aus Kostengründen ist es besonders zu bevorzugen, wenn das Motorritzel ein Kunststoffritzel ist. Wie bereits weiter oben erwähnt wurde, wird durch den Fortfall des bisher notwendigen Verbindens des Motorritzels mit der Motorwelle die Verwendung von Materialien möglich, bei denen sich bisher wegen ihrer Eigenschaften eine Verbindung mit der üblicherweise aus einem Metall bestehenden Motorwelle als schwierig erwies, etwa wegen schlechter Verfügbarkeit von Klebstoffen, Problemen bei der Erzeugung von Metall-Metall-Verbindungen wegen der Werkstoffkombination, oder weil das Material des Ritzels so weich ist, dass es einem Verpressschritt nicht ohne unerwünschte Deformationen standhalten kann. Solche Probleme lagen insbesondere im Zusammenhang mit der Verwendung von Kunststoffritzeln vor. Es können aber auch Metall- oder Keramikritzel, insbesondere wenn sie durch Anwendung von MIM- (metal injection molding) oder CIM- (ceramic injection) Verfahren gefertigt wurden, verwendet werden.

Besonders vorteilhaft ist die Erfindung einsetzbar, wenn das Motorritzel eine Schrägverzahnung aufweist. Bei Zahnrädern mit Schrägverzahnungen, die ineinander kämmen, können nämlich Kräfte in Richtung axial zur Motorachse auftreten. Diese Kräfte können nun durch Verschiebbarkeit des lediglich auf die Motorwelle aufgesteckten, dort aber nicht befestigten Motorritzels abgefangen werden, was besonders sicher einem Verklemmen des Getriebes vorbeugt.

Bildet man die Abtriebswelle einteilig mit einem Planetenträger samt Lagerbolzen für Planetenwälzkörper aus, so kann man weitere Herstellungskosten sparen, weil das Zusammenfügen entsprechender Einzelkomponenten fortfällt. Insbesondere wird auch eine axiale Sicherung am Abtrieb überflüssig und kann entfallen. Damit entfällt konkret einerseits die Montage eines Sicherungsrings, was eine Kostenersparnis mit sich bringt, während andererseits auch die Werkzeugkosten gesenkt werden können, da auch keine Lagerung für einen Sicherungsring mehr geschaffen werden muss, so dass auch keine Schieber zur radialen Entformung mehr nötig sind.

Dies gilt in besonderem Maße dann, wenn die einteilig ausgebildete Abtriebswelle einschließlich des Planetenträgers und der Lagerbolzen für Planetenwälzkörper mit einem urformenden Fertigungsverfahren gefertigt ist. Dabei kann Kunststoff verwendet werden, es können aber auch Metall- oder Keramikteile durch Anwendung von MIM- (metal injection molding) oder CIM-(ceramic injection) Verfahren gefertigt werden. Die Verwendung derartiger urformender Herstellungsverfahren hat darüber hinaus den signifikanten Vorteil, dass sie es ermöglichen, das Hohlwellenprofil im Abtrieb geschlossen herzustellen. Dadurch wird die Gefahr eines Schmutzeintrags nachhaltig reduziert und gegen null gefahren.

Darüber hinaus erweist es sich als vorteilhaft, dass wegen dieser Maßnahme Lagerbolzen nicht mehr separat in den Planetenträger eingefügt und dann befestigt werden müssen, da bereits eine leichte Verkippung dieser Lagerbolzen relativ zueinander das Risiko eines Verklemmens des Getriebes erheblich erhöhen kann, das nun vermieden wird.

Die Kostenersparnis wird in besonderem Maße dann erreicht, wenn die einteilig ausgebildete Abtriebswelle einschließlich des Planetenträgers und der Lagerbolzen für Planetenwälzkörper aus Kunststoff , auf der Basis eines Metallpulvers oder auf der Basis eines Keramikpulvers, insbesondere durch eine Spritzgusstechnik wie Kunststoffspritzguss, PIM oder CIM gefertigt ist.

Eine besonderes vorteilhafte Weiterbildung der Erfindung sieht vor, dass die Lagerbolzen des Planetenträgers in Richtung auf den Motor hin die auf den Lagerbolzen angeordneten Wälzkörper überragen. Dadurch wird unter Aufgabe des Kriteriums der Bauraumminimierung, die bislang im Stand der Technik stets die konkrete Konstruktion des Klappenantriebs maßgeblich bestimmte, ein Bewegungsspielraum für das Motorritzel in Richtung axial zur Motorwelle geschaffen, der sicherstellt, dass das Motorritzel nicht verklemmt. Gleichzeitig können radiale Kräfte, die z.B. bei einem Spindelantrieb für die Klappe auftreten, durch die überragenden Lagerbolzen abgefangen werden.

Zweckmäßig ist es insbesondere, wenn das Motorritzel durch einen Formschluss mit zumindest einem Abschnitt der Motorwelle gegen ein radiales Verdrehen relativ zur Motorwelle gesichert ist. Dies lässt sich insbesondere dadurch realisieren, dass der Querschnitt des dem Planetengetriebe zugewandte Endabschnitt der Motorwelle ausgehend von einem kreisförmigen Querschnitt so modifiziert wird, dass das Material, das auf einer Seite einer Sekante des Kreises liegt, entfernt wird. Dieser Abschnitt wird also ausgehend von einer zylindrischen Gestalt so bearbeitet, dass eine parallel zur Achse der Motorwelle verlaufende Ebene entsteht. Diese Form wird als "D-förmig" bezeichnet. Im Motorritzel wird dann eine Aufstecköffnung vorgesehen, deren Querschnitt an den Querschnitt des modifizierten Abschnitts der Motorwelle angepasst ist.

Die Erfindung wird nachfolgend anhand von Figuren, die eine beispielhafte Realisation der Erfindung darstellen, näher erläutert. Es zeigen:
- Fig. 1:: eine Explosionszeichnung der Baugruppen eines Klappenantriebs,
- Fig. 2:: eine Schnittzeichnung durch ein Ausführungsbeispiel eines Klappenantriebs,
- Fig. 3:: eine Aufsicht auf den ersten Planetenträgers des in Figur 2 dargestellten Ausführungsbeispiels mit daran angeordneten Planetenwälzkörpern,
- Fig. 4a:: eine Aufsicht auf den zweiten Planetenträger des in Figur 3 dargestellten Ausführungsbeispiels,
- Fig. 4b:: eine Schnittzeichnung des in Figur 4a dargestellten zweiten Planetenträgers,
- Fig. 5a:: eine Aufsicht auf einen Planetenträger nach dem Stand der Technik, und
- Fig. 5b:: eine Schnittzeichnung des in Figur 5a dargestellten Planetenträgers.

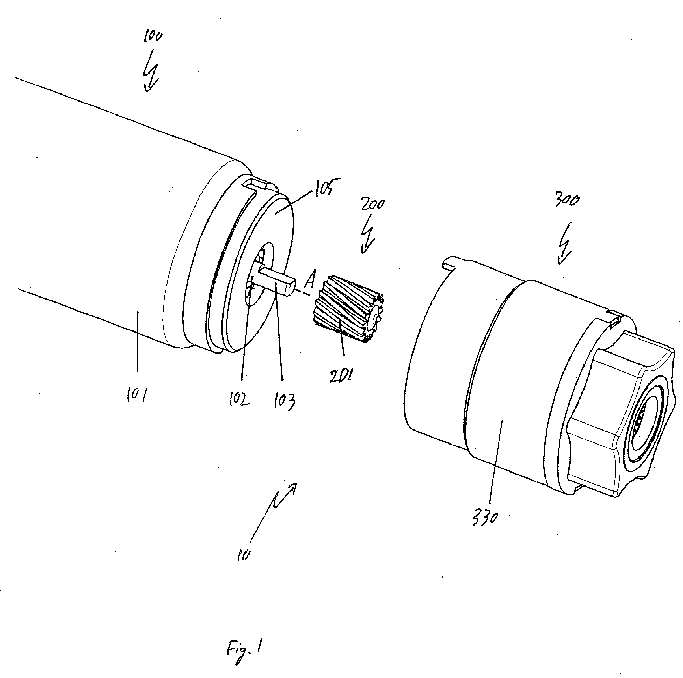

Da die Figuren 1 bis 4 unterschiedliche Aspekte derselben Ausführungsform der Erfindung zeigen, werden in diesen Figuren identische Bezugszeichen verwendet.

Der in Figur 1 dargestellte Klappenantrieb 10 weist als Baugruppen einen Motor 100 mit Motorgehäuse 101 nebst am Motorgehäuse 101 fixiertem Motorgehäusedeckel 105 und Motorwelle 102 mit Drehachse A, ein im zusammengesetzten Zustand des Klappenantriebs 10 auf die Motorwelle 102 aufgestecktes Motorritzel 200 mit Schrägverzahnung 201 und eine Getriebebaugruppe 300 auf. Bevorzugt ist das Motorritzel 200 aus Kunststoff gefertigt, es können aber z.B. auch Metall- oder Keramikritzel, insbesondere wenn sie durch Anwendung von MIM- (metal injection molding) oder CIM- (ceramic injection) Verfahren gefertigt wurden, verwendet werden.

Wie man ferner der Figur 1 entnimmt, hat die Motorwelle 102 auf ihrer der Getriebebaugruppe 300 zugewandten Seite einen Abschnitt 103 mit einem D-förmigen Querschnitt, also einem Abschnitt, dessen Form durch Erzeugen einer parallel zur Drehachse A verlaufenden, ebenen Oberfläche 104 in dem ursprünglich zylindrischen Abschnitt der Motorwelle 102 herstellbar ist. Das Motorritzel 200 weist eine wegen der in Figur 1 gewählten Blickrichtung nicht erkennbare Ausnehmung 203 auf, die zumindest in einem Abschnitt 202 an die D-förmige Form des Abschnitts 103 angepasst ist, so dass ein Formschluss entsteht, der das Motorritzel 200 gegen ein radiales Verdrehen relativ zur Motorwelle 102 sichert.

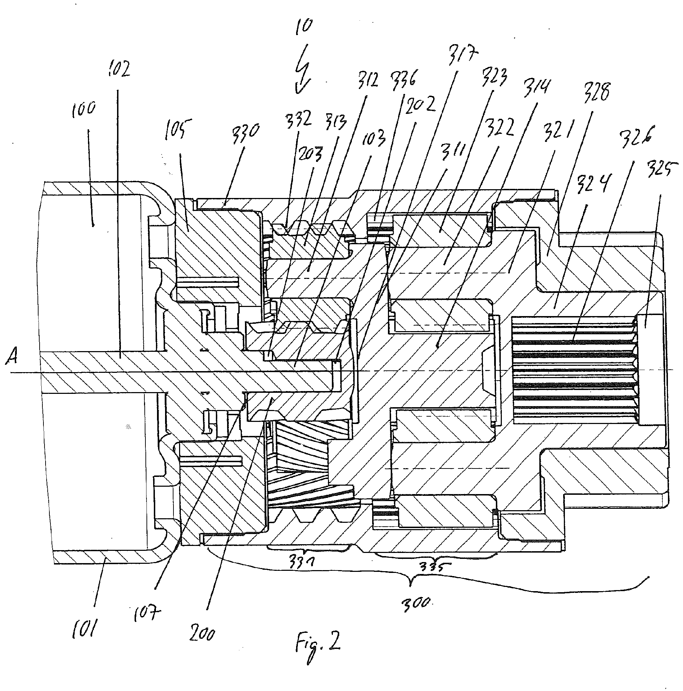

Der Schnittzeichnung gemäß Figur 2 lassen sich besonders gut der Aufbau der Getriebebaugruppe 300 und die Funktionsweise des gesamten Klappenantriebs 10 entnehmen. Die Getriebebaugruppe 300 ist als zweistufiges Planetengetriebe, das in ein Gehäuse 330 aufgenommen ist, ausgeführt und am Motorgehäuse 101 oder dem Motorgehäusedeckel 105 drehfest fixiert.

In der hier gezeigten Ausführungsform der Getriebebaugruppe 300 weist das erste Planetengetriebe eine Schrägverzahnung auf, während die Zähne der Zahnräder des zweiten Planetengetriebes parallel zur Drehachse verlaufen.

Das Hohlrad des ersten Planetengetriebes wird dabei durch eine in einem Abschnitt 331 der Innenseite des Gehäuses 330 angeordnete Verzahnung 332 gebildet, das Sonnenrad des ersten Planetengetriebes durch das Motorritzel 200.

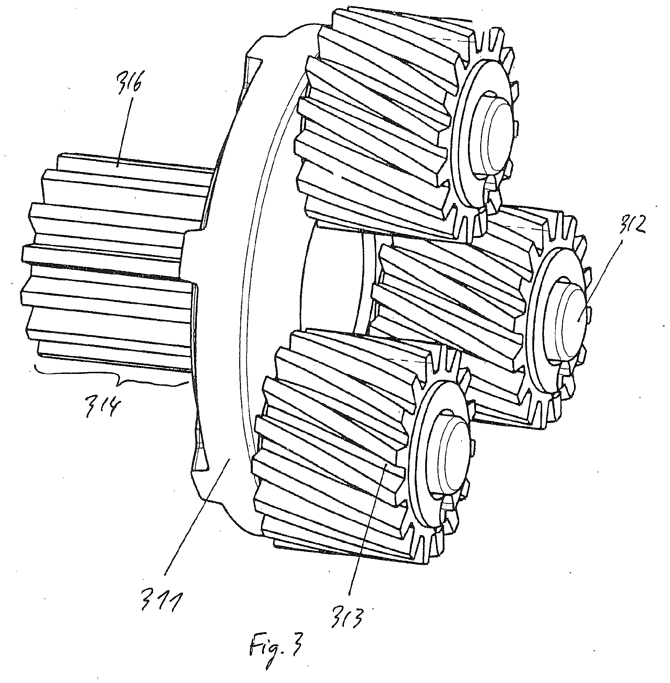

Ferner weist das erste Planetengetriebe einen ersten, in Figur 3 separat abgebildeten Planetenträger 311 mit einstückig angeformten Lagerbolzen 312 auf, auf denen Planetenwälzkörper 313, die insbesondere als Planetenräder ausgeführt sein können, drehbar angeordnet sind. Die Planetenwälzkörper 313 können dabei optional, insbesondere z.B. mit Sprengringen, auf den Lagerbolzen 312 fixiert oder zumindest in ihrer Bewegung parallel zur Längsachse der Lagerbolzen 312 beschränkt sein. Dabei ist zu betonen, dass die Lagerbolzen 312 in Richtung auf den Motor 100 hin die auf den Lagerbolzen 312 angeordneten Wälzkörper 313 überragen, wie man besonders gut der Darstellung gemäß Figur 3 entnehmen kann.

Ebenfalls einstückig am ersten Planetenträger 311 angeformt ist eine erste Abtriebswelle 314, welche durch eine Außenverzahnung 316 als Zahnrad ausgebildet ist und das Sonnenrad des zweiten Planetengetriebes bildet.

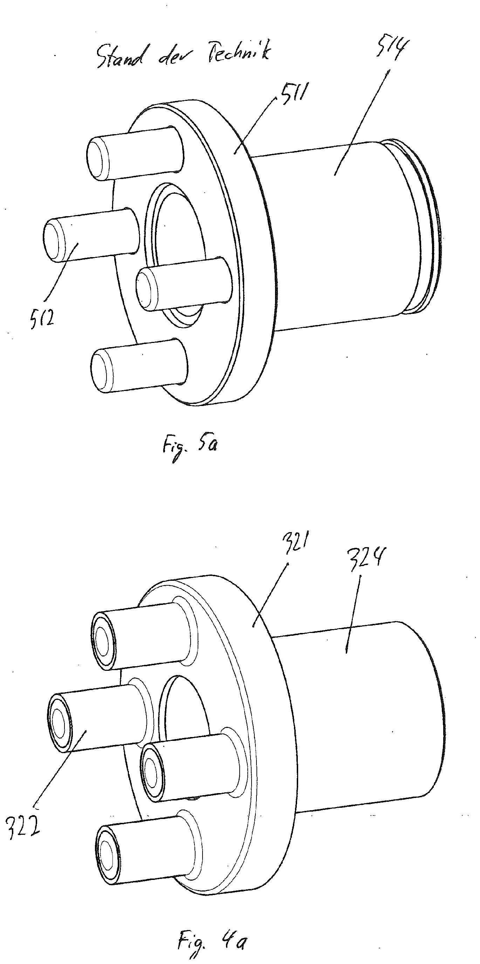

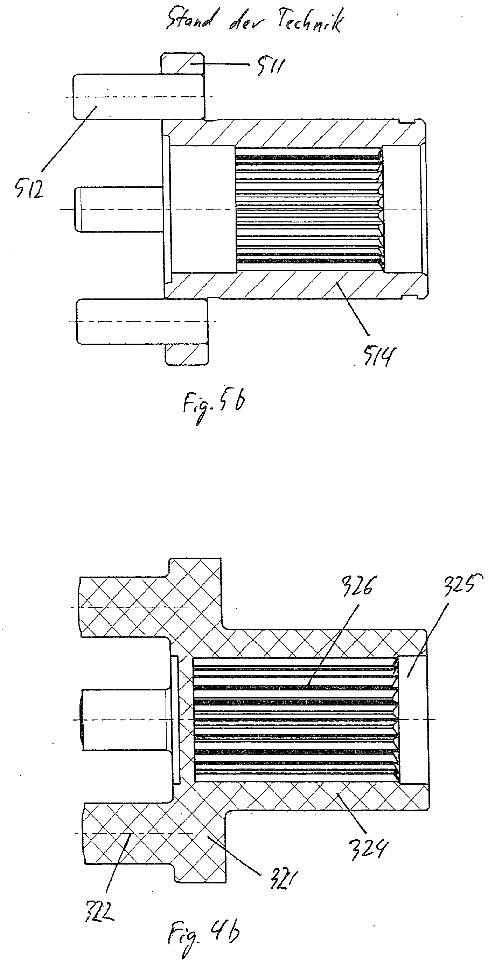

Weitere Bestandteile des zweiten Planetengetriebes sind der in den Figuren 4a und 4b abgebildete zweite Planetenträger 321 mit einstückig angeformten Lagerbolzen 322, auf denen Planetenwälzkörper 323, die insbesondere als Planetenräder ausgeführt sein können, drehbar angeordnet sind und mit ebenfalls einstückig am zweiten Planetenträger 321 angeformter zweiter Abtriebswelle 324, die, wie in Figur 4b zu erkennen ist, einen Hohlraum 325 mit einer Innenverzahnung 326 aufweist sowie das durch eine in einem Abschnitt 335 der Innenseite des Gehäuses 330 angeordnete Verzahnung 336 gebildet zweite Hohlrad. Der zweite Planetenträger 321 ist durch einen Getriebedeckel 328, der z.B. am Gehäuse 330 fixiert sein kann, gegen axiale Verschiebung gesichert.

Die in den Figuren 3, 4a und 4b abgebildeten Planetenträger 311 bzw. 321, bei denen jeweils die Lagerbolzen 312 bzw. 322 und die Abtriebswellen 314 bzw. 324 nebst einer an diesen angeformten Verzahnung 316 bzw. 326 einstückig ausgeführt sind, stellen eine wesentliche Verbesserung gegenüber aus dem Stand der Technik bekannten Planetenträgeranordnungen, wie sie in den Figuren 5a und 5b dargestellt sind, dar. Bekannte Planetenträger 511 wiesen zwar bereits eine einstückig mit dem Planetenträger 511 verbundene Abtriebswelle 514 auf, aber die Lagerbolzen 512 wurden als separate Bauteile bereitgestellt und in den Planetenträger 511 eingefügt, insbesondere durch Verpressen fixiert. Als Konsequenz war nicht nur eine Vielzahl von Arbeitsschritten zur Erzeugung der Baugruppe notwendig, sondern geringe Abweichungen der Orientierung der Lagerbolzen von der Sollposition führte zu einer Verkippung der darauf angeordneten Planetenwälzkörper und einer entsprechenden Erhöhung der Neigung des Planetengetriebes zu verklemmen. Zudem war die Verwendung von mit urformenden Herstellungsverfahren hergestellten Abtriebsbaugruppen, die Preis- und Gewichtsvorteile bieten, insbesondere Vollkunststoff-Abtriebsbaugruppen oder durch CIM- oder PIM-Verfahren hergestellten Abstriebsbaugruppen nicht möglich.

Unter erneuter Bezugnahme auf Figur 2 soll nun kurz dargestellt werden, was geschieht, wenn der Motor 100 betrieben wird. Die Motorwelle 102 dreht sich um ihre Drehachse A, wodurch sich das Motorritzel 200 wegen seines Formschlusses mit dem Abschnitt 103 der Motorwelle 102 ebenfalls um die Drehachse A herum dreht. Die mit der Schrägverzahnung 201 des Motorritzels 200 kämmenden, schräg verzahnten Planetenwälzkörper 313 werden durch das als Sonnenrad dienende Motorritzel 200 angetrieben und laufen auf dem Hohlrad des ersten Planetengetriebes, das durch die in einem Abschnitt 331 der Innenseite des Gehäuses 330 angeordnete Verzahnung 332 gebildet wird, entlang, wodurch, weil das Gehäuse 330 drehfest mit dem Motor 100 verbunden ist, der erste Planetenträger 311 mit der daran angeordneten ersten Abtriebswelle 314 in Drehung versetzt wird.

Wie bereits erwähnt, bildet die an der Abtriebswelle 314 vorgesehene Außenverzahnung 316 das Sonnenrad des zweiten Planetengetriebes. Es kämmt mit den Planetenwälzkörpern 323 und versetzt diese in Drehung, wodurch sie auf dem Hohlrad des zweiten Planetengetriebes laufen, das durch eine in einem Abschnitt 335 der Innenseite des Gehäuses 330 angeordnete Verzahnung 336 gebildet wird. Dementsprechend wird, da das Gehäuse 330 drehfest mit dem Motor 100 verbunden ist, der zweite Planetenträger 321 mit der daran angeordneten ersten Abtriebswelle 324 in Drehung versetzt, mit der dann die nicht dargestellte Antriebsmechanik, die diese Bewegung in eine Öffnungs- oder Schließbewegung der Klappe umsetzt, angetrieben werden kann.

Besonders wesentlich ist dabei, dass das Motorritzel 200 nicht, wie im Stand der Technik, in einem Presssitz oder in anderer Weise fixiert auf der Motorwelle 102 angeordnet ist, sondern auf die Motorwelle 102 aufgeschoben ist. Mit anderen Worten befindet sich das Motorritzel 200 in einem Schiebesitz, ist also in axialer Richtung der Motorwelle 102, die durch deren Drehachse A vorgegeben ist, beweglich angeordnet, so dass es sich zwischen einem ersten, an der Motorwelle 102 vorgesehenen, motorseitigen Anschlag 107 und einem zweiten, am ersten Planetenträger 311 angeordneten, getriebeseitigen Anschlag 317 verschieben kann. Durch das so geschaffene Spiel für das Motorritzels 200 kann das Risiko für ein Verklemmen der Getriebebaugruppe 300 signifikant reduziert werden.

### Bezugszeichenliste

- 10: Klappenantrieb
- 100: Motor
- 101: Motorgehäuse
- 102: Motorwelle
- 103: Abschnitt
- 105: Motorgehäusedeckel
- 107: Anschlag
- 200: Motorritzel
- 201: Schrägverzahnung
- 202: Abschnitt
- 203: Ausnehmung
- 300: Getriebebaugruppe
- 311, 321: Planetenträger
- 312, 322: Lagerbolzen
- 313, 323: Planetenwälzkörper
- 314, 324: Abtriebswelle
- 316: Außenverzahnung
- 317: Anschlag
- 325: Hohlraum
- 326: Innenverzahnung
- 328: Getriebedeckel
- 330: Gehäuse
- 331, 335: Abschnitt
- 332, 336: Verzahnung
- 511: Planetenträger
- 512: Lagerbolzen
- 514: Abtriebswelle

- A: Drehachse

## Patentansprüche

1. Angetriebene Klappenanordnung, insbesondere Heckklappenanordnung, für ein Kraftfahrzeug mit einer Klappe und mit einem Klappenantrieb (10) zum Öffnen und/oder Schließen der Klappe, wobei der Klappenantrieb (10) einen Motor (100) mit einer Motorwelle (102) und einem Motorritzel (200) und mindestens ein Planetengetriebe mit Sonnenrad, Planetenträger (311,321) mit auf Lagerbolzen (312,322) angeordneten Planetenwälzkörpern (313,323) und Hohlrad aufweist, wobei das Sonnenrad des Planetengetriebes durch das Motorritzel (200) gebildet wird und über das Planetengetriebe eine Abtriebswelle (314,324) angetrieben wird,
**dadurch gekennzeichnet, dass** das Motorritzel (200) auf die Motorwelle (102) aufgesteckt und das Motorritzel (200) in axialer Richtung der Motorwelle (102) verschiebbar angeordnet ist.

2. Angetriebene Klappenanordnung nach Anspruch 1,
**dadurch gekennzeichnet, dass** die Verschiebbarkeit des Motorritzels (200) in axialer Richtung der Motorwelle (102) in Richtung auf ein Gehäuse (101) des Motors hin und/oder in Richtung auf den Planetenträger (311) des Planetengetriebes hin durch einen Anschlag (107,317) begrenzt wird.

3. Angetriebene Klappenanordnung nach einem vorstehenden Anspruch,
**dadurch gekennzeichnet, dass** das Motorritzel (200) ein Kunststoffritzel ist.

4. Angetriebene Klappenanordnung nach einem vorstehenden Anspruch,
**dadurch gekennzeichnet, dass** das Motorritzel (200) eine Schrägverzahnung aufweist.

5. Angetriebene Klappenanordnung nach einem vorstehenden Anspruch,
**dadurch gekennzeichnet, dass** die Abtriebswelle (314,324) einteilig mit einem Planetenträger (311,321) samt Lagerbolzen (312,322) für Planetenwälzkörper (313,323) ausgebildet ist.

6. Angetriebene Klappenanordnung nach Anspruch 5,
**dadurch gekennzeichnet, dass** die einteilig ausgebildete Abtriebswelle (314,324) einschließlich des Planetenträgers (311,321) und der Lagerbolzen (312,322) für Planetenwälzkörper (313,323) in einem urformenden Herstellungsverfahren, insbesondere aus Kunststoff oder durch MIM- oder CIM-Verfahren, gefertigt ist.

7. Angetriebene Klappenanordnung nach einem vorstehenden Anspruch,
**dadurch gekennzeichnet, dass** die Lagerbolzen (312) des Planetenträgers (311) in Richtung auf den Motor (100) hin die auf den Lagerbolzen (312) angeordneten Planetenwälzkörper (313) überragen.

8. Angetriebene Klappenanordnung nach einem vorstehenden Anspruch,
**dadurch gekennzeichnet, dass** das Motorritzel (200) durch einen Formschluss mit zumindest einem Abschnitt (103) der Motorwelle (102) gegen ein radiales Verdrehen relativ zur Motorwelle (102) gesichert ist.

## Claims

1. Powered hatch arrangement, in particular, rear hatch arrangement, for a motor vehicle having a hatch and a hatch drive (10) for opening and/or closing the hatch, wherein the hatch drive (10) comprises a motor (100) with a motor shaft (102) and a motor pinion (200) and at least one planet gear with sun gear, planet carrier (311, 321), planet roller elements (313, 323) disposed on bearing pins (312, 322) and ring gear, wherein the sun gear of the planet gear is formed by the motor pinion (200) and a drive shaft (314, 324) is driven by the planet gear,
**characterized in that** the motor pinion (200) is mounted onto the motor shaft (102) and the motor pinion (200) is arranged moveably in the axial direction of the motor shaft (102).

2. Powered hatch arrangement in accordance with claim 1,
**characterized in that** the movability of the motor pinion (200) is limited by an end stop (107, 317) in the axial direction of the motor shaft (102) towards a housing (101) of the motor and/or in the direction of the planet carrier (311) of the planet gear.

3. Powered hatch arrangement in accordance with any of the preceding claims,
**characterized in that** the motor pinion (200) is a plastic pinion.

4. Powered hatch arrangement in accordance with any of the preceding claims,
**characterized in that** the motor pinion (200) has helical teeth.

5. Powered hatch arrangement in accordance with any of the preceding claims,
**characterized in that** the drive shaft (314, 324) is implemented as a single part together with a planet carrier (311, 321) including bearing pins (312, 322) for planet roller elements (313, 323).

6. Powered hatch arrangement in accordance with claim 5,
**characterized in that** the drive shaft (314, 324) implemented as a single part, including the planet carrier (311, 321) and the bearing pins (312, 322) for planet roller elements (313, 323), is produced in a primary forming manufacturing process or by means of an MIM or a CIM process.

7. Powered hatch arrangement in accordance with any of the preceding claims,
**characterized in that** the bearing pins (312) of the planet carrier (311) extend over the planet roller elements (313) disposed on the bearing pins (312) in the direction towards the motor (100).

8. Powered hatch arrangement in accordance with any of the preceding claims,
**characterized in that** the motor pinion (200) is secured against a radial rotation relative to the motor shaft (102) by means of a tight fit with at least one segment (103) of the motor shaft (102).

## Revendications

1. Dispositif de volet motorisé, notamment hayon motorisé de véhicule automobile comprenant un volet et un entraînement de volet (10) pour ouvrir et/ou fermer le volet,
l'entraînement de volet (10) comprenant un moteur (100) ayant un arbre moteur (102) et un pignon moteur (200) ainsi qu'au moins un train planétaire composé d'une roue solaire, d'un porte-satellites (311, 321) avec des satellites (313, 323) montés sur des goujons de palier (312, 322) ainsi qu'une couronne de train planétaire,
la roue solaire du train planétaire étant formée par le pignon moteur (200) et entraînée par l'arbre de sortie (314, 324) par l'intermédiaire de la transmission planétaire,
dispositif de volet **caractérisé en ce que**
le pignon moteur (200) est emmanché sur l'arbre moteur (102) et le pignon moteur (200) est coulissant dans la direction axiale de l'arbre de moteur (102).

2. Dispositif de volet motorisé selon la revendication 1,
**caractérisé en ce que**
le coulissement du pignon moteur (200) dans la direction axiale de l'arbre de moteur (102) est limité par une butée (107, 317) dans la direction du carter (101) du moteur et/ou dans la direction du porte-satellites (311) du train planétaire.

3. Dispositif de volet motorisé selon l'une des revendications précédentes,
**caractérisé en ce que**
le pignon moteur (200) est un pignon en matière plastique.

4. Dispositif de volet motorisé selon l'une des revendications précédentes,
**caractérisé en ce que**
le pignon moteur (200) a une denture hélicoïdale.

5. Dispositif de volet motorisé selon l'une des revendications précédentes,
**caractérisé en ce que**
l'arbre de sortie (314, 324) est réalisé en une seule pièce avec le porte-satellites (311, 321) y compris les goujons de palier (312, 322) pour les satellites (313, 323).

6. Dispositif de volet motorisé selon la revendication 5,
**caractérisé en ce que**
l'arbre de sortie (314, 324) est réalisé en une seule pièce comprenant le porte-satellites (311, 321) et les goujons de palier (312, 322) des satellites (313, 323) selon un procédé de fabrication à partir de la forme de base notamment en matière plastique ou selon un procédé par injection de poudre MIM (moulage par injection métallique) ou CIM (moulage par injection céramique).

7. Dispositif de volet motorisé selon l'une des revendications précédentes,
**caractérisé en ce que**
les goujons de palier (312) du porte-satellites (311) dépassent en direction du moteur (100), des satellites (313) installés sur les goujons de palier (312).

8. Dispositif de volet motorisé selon l'une des revendications précédentes,
**caractérisé en ce que**
le pignon moteur (200) est fixé par une liaison par la forme avec au moins un segment (103) de l'arbre moteur (102) contre une rotation radiale par rapport à l'arbre moteur (102).
